# EUROPÄISCHE PATENTSCHRIFT

(11) **EP 3 268 547 B1**
(45) Veröffentlichungstag und Bekanntmachung des Hinweises auf die Patenterteilung: **08.05.2019**
(21) Anmeldenummer: 16701254.1
(22) Anmeldetag: 20.01.2016
(51) Int. Cl.: E03C 1/086, E03C 1/04

(54) **IN EINEN ROHRABSCHNITT ÜBER PRESSPASSUNG EINSETZBARES BAUTEIL**
PART INSERTABLE INTO A PIPE SECTION USING A PRESS-FIT CONNECTION
PIÈCE INSÉRABLE PAR AJUSTEMENT SERRÉ DANS UNE SECTION DE CONDUIT

(30) Priorität: 09.03.2015 DE 202015001883 U
(43) Veröffentlichungstag der Anmeldung: 17.01.2018
(73) Patentinhaber: Neoperl GmbH, 79379 Müllheim (DE)
(72) Erfinder: SÖCHTIG, Michael, 79395 Neuenburg (DE); TWITCHETT, Simon, Kidderminster DY11 7XF (GB)
(74) Vertreter: Börjes-Pestalozza, Henrich
(86) Internationale Anmeldenummer: PCT/EP2016/000099
(87) Internationale Veröffentlichungsnummer: WO 2016/142021

(56) Entgegenhaltungen:
- WO-A1-2011/157309
- US-A1- 2003 006 315

## Beschreibung

Die Erfindung betrifft ein sanitäres Einsetzelement mit einem hülsenförmigen Einsetzzapfen, mit dem das Einsetzelement in eine stirnseitige Einsetzöffnung eines sanitären Leitungsabschnitts einsetzbar ist, welcher Einsetzzapfen zur reibschlüssigen Befestigung in der Einsetzöffnung zumindest außenumfangsseitig eine Mantellage aus elastischem Material aufweist, und mit einer Aussteifungshülse, die zur quer zur Zapfen-Längsachse orientierten Aussteifung der Mantellage vorgesehen, aus einem demgegenüber unnachgiebigen Material hergestellt und von der Mantellage umgriffen ist, wobei an der Mantellage mindestens zwei Halteflügel aus elastischem Material einstückig angeformt sind, die in Umfangsrichtung des Einsetzzapfens verteilt angeordnet sind und quer zur Zapfen-Längsachse des Einsetzzapfens über diesen vorstehen, und wobei die Halteflügel einen gebogenen Flügelquerschnitt haben.

Aus der US 2003/006315 A1 kennt man bereits ein sanitäres Einsetzelement der eingangs erwähnten Art, das in eine Wasserleitung zwischengeschaltet werden kann, um die Durchflussleistung auf eine konstante Durchflussmenge einzuregeln. Das vorbekannte Einsetzelement weist einen hülsenförmigen Einsetzzapfen auf, der in eine stirnseitige Einsetzöffnung eines sanitären Leitungsabschnitts einsetzbar ist. Um den Einsetzzapfen in der Einsetzöffnung reibschlüssig zu befestigen, weist der Einsetzzapfen außenumfangsseitig eine Mantellage aus gummielastischem Material auf. Diese Mantellage umhüllt ein als steife Hülse ausgebildetes Gehäuse, welches auch die Mantellage quer zur Zapfen-Längsachse aussteift und aus einem demgegenüber unnachgiebigen Material hergestellt ist. In einer in Fig. 4 der US 2003/006315 A1 dargestellten Ausführungsform sind an die Mantellage zumindest zwei Halteflügel aus elastischem Material einstückig angeformt, die in Umfangsrichtung des Zapfens verteilt angeordnet sind und quer zur Zapfen-Längsachse über diesen vorstehen. Diese Halteflügel sind fingerförmig ausgebildet und mit ihrer Längserstreckung in Zapfen-Längsrichtung orientiert. Die fingerförmigen Halteflügel sind gekrümmt ausgebildet, derart, dass ein gekrümmter Teilbereich der fingerförmigen Halteflügel quer zur Zapfen-Längsachse über den Zapfen vorstehen. Da die Halteflügel nur mit einem vergleichsweise kurzen Abschnitt ihres gekrümmten Teilbereiches am Innenumfang der Einsetzöffnung anliegen, können diese Halteflügel kaum einen festen Halt des Einsetzelements in der Einsetzöffnung bewirken. Im Einsetzzapfen ist ein zentraler Regeldorn verschieblich geführt, der von einer Ausgangsstellung unter dem Druck des durchströmenden Wassers derart in eine sich in Durchströmrichtung verjüngende Zapfenöffnung vorgeschoben werden kann, dass sich der lichte Durchflussquerschnitt mit steigendem Druck zunehmend verengt. Da in dem Zapfen des vorbekannten Einsetzelements auch der Regeldorn verschieblich geführt ist, weist das vorbekannte Einsetzelement eine gewisse Längserstreckung auf, die je-doch nicht immer zur Verfügung steht.

Aus der WO 2011/157309 A1 kennt man bereits ein sanitäres Einsetzelement, das einen dichtringförmigen Teilbereich hat, an dem ein hülsenförmiger Einsetzzapfen angeformt ist. Das vorbekannte Einsetzelement kann in eine stirnseitige Einsetzöffnung eines sanitären Leitungsabschnitts eingesetzt werden, bis der dichtringförmige Teilbereich auf dem zuströmseitigen Stirnrand dieses Leitungsabschnitts aufliegt. Der hülsenförmige Einsetzzapfen ist über einen Außenumfang hinaus vollständig aus elastischem Material hergestellt, so dass das Einsetzelement reibschlüssig in der Einsetzöffnung gehalten ist. Der dichtringförmige Teilbereich des Einsetzelements umgreift das scheibenförmige Reglergehäuse eines Durchflussmengenreglers, der in seinem Reglergehäuse einen Ringkanal hat, in dem ein ringförmiger Drosselkörper aus elastischem Material angeordnet ist, der zwischen sich und einer, an einer innenliegenden und/oder außenliegenden Kanalwandung vorgesehenen Regelprofilierung einen durch den sich unter dem Druck des zuströmenden Wassers verformenden Drosselkörper veränderbar ist. Damit das vorbekannte Einsetzelement in die unterschiedlichen lichten Durchmesser der verschiedenen Einsetzöffnungen eingesetzt werden kann und damit sich das Einsetzelement gut an diese unterschiedlichen lichten Durchmesser anpassen kann, sind an dem Einsetzzapfen mehrere, über den Zapfenumfang verteilt angeordnete Halteflügel vorgesehen. Diese Halteflügel können sich propellerförmig an den Außenumfang des Haltezapfens anlegen, wenn das Einsetzelement in eine Einsetzöffnung eingesetzt werden soll, die einen vergleichsweise kleinen lichten Durchmesser hat. Dieser vergleichsweise kleine lichte Durchmesser wird durch den demgegenüber dicken Durchmesser des Haltezapfens noch zusätzlich eingeschränkt, was insbesondere bei niedrigen Drücken in einer vergleichsweise schlechten, das heißt geringen Durchflussleistung bemerkbar ist.

Es besteht daher insbesondere die Aufgabe, ein sanitäres Einsetzelement der eingangs erwähnten Art zu schaffen, das mit seinem Einsetzzapfen sicher und fest in der Einsetzöffnung eines sanitären Leitungsabschnitts montierbar ist und das sich gleichzeitig auch durch ein erhöhtes Durchflussvolumen auch bei niedrigen Drücken auszeichnet.

Die erfindungsgemäße Lösung besteht bei dem sanitären Einsetzelement der eingangs erwähnten Art insbesondere darin, dass die Flügelquerschnitte der Halteflügel in dieselbe Umfangsrichtung gebogen sind, und dass die Halteflügel zur Verformung der Halteflügel in dieselbe Umfangsrichtung jeweils einen, in Einsetzrichtung des Einsetzzapfens vorderen Stirnrandbereich aufweisen, der sich in Einsetzrichtung zunehmend erweitert.

Das erfindungsgemäße sanitäre Einsetzelement weist einen hülsenförmigen Einsetzzapfen auf, mit dem das Einsetzelement in eine stirnseitige Einsetzöffnung eines sanitären Leitungsabschnitts einsetzbar ist. Dieser Einsetzzapfen weist zur reibschlüssigen Befestigung in der Einsetzöffnung zumindest außenumfangsseitig eine Mantellage aus elastischem Material auf. Um auch eine vergleichsweise dünne Mantellage, die den lichten Durchflussquerschnitt durch den hülsenförmigen Ein-setzzapfen insbesondere auch bei niedrigen Drücken nicht wesentlich beeinträchtigt, in einer quer zur Zapfen-Längsachse orientierten Richtung ausreichend auszusteifen, damit das elastische Material der Mantellage gegen den Leitungsinnenumfang gepresst und der Einsetzzapfen dort sicher und fest gehalten werden kann, ist eine Aussteifungshülse aus einem demgegenüber unnachgiebigen Material vorgesehen, die von der Mantellage umgriffen wird. Zum Erreichen eines größeren Durchflusses im Niederdruckbereich sind größere Querschnitte erforderlich.

Hierzu muss aber die Wandstärke des hülsenförmigen Einsetzzapfens verringert werden. Diese Wandstärke lässt sich jedoch nicht beliebig reduzieren, weil andernfalls das elastische Material des Einsetzzapfens beim Einpressen in die stirnseitige Öffnung eines Leitungsabschnitts kollabieren würde, so dass der Einsetzzapfen nicht mehr den gewünschten Anpressdruck übertragen könnte. Das erfindungsgemäße Einsetzelement weist deshalb eine Aussteifungshülse aus unnachgiebigem Material auf, die von der elastischen Mantellage umgriffen wird. Diese Aussteifungshülse stellt sicher, dass das elastische Material der außenumfangsseitig vorgesehenen Mantellage stets eine entsprechende Verpressung zu der Umfangswandung des Leitungsabschnitts übertragen kann.

Damit der Einsetzzapfen in verschiedene Einsetzöffnungen eingesetzt werden kann, die sich in einem größeren Querschnittsbereich voneinander unterscheiden, und damit der Einsetzzapfen die entsprechenden Durchmesserunterschiede gut ausgleichen kann, ist erfindungsgemäß vorgesehen, dass an der Mantellage mindestens zwei Halteflügel aus elastischem Material einstückig angeformt sind, die in Umfangsrichtung des Einsetzzapfens verteilt angeordnet sind und quer zur Zapfen-Längsachse des Einsetzzapfens über diesen vorstehen.

Um beim Einsetzen des erfindungsgemäßen Einsetzelements und beim Eindrücken seines Einsetzzapfens in die stirnseitige Einsetzöffnung eines sanitären Leitungsabschnitts den Einsetzzapfen zu zentrieren, ist bei dem erfindungsgemäßen Einsetzelement vorgesehen, dass an der Mantellage mindestens zwei und vorzugsweise mehr als zwei Halteflügel vorstehen, die in Umfangsrichtung des Einsetzzapfens vorzugsweise in gleichmäßigen Abständen voneinander verteilt angeordnet sind.

Die am Einsetzzapfen quer zur Zapfen-Längsachse vorstehenden Halteflügel können sich besonders gut an die unterschiedlichen Durchmesser verschiedener Einsetzöffnungen anpassen, wenn der wenigstens eine Halteflügel einen gebogenen Flügelquerschnitt hat.

Da die Halteflügel des erfindungsgemäßen Einsetzelements einen gebogenen Flügelquerschnitt haben, können sich die am Einsetzzapfen quer zur Zapfen-Längsachse vorstehenden Halteflügel besonders gut an die unterschiedlichen Durchmesser verschiedener Einsetzöffnungen anpassen.

Damit sich die Halteflügel nicht gegenseitig im Wege stehen, wenn der Einsetzzapfen in eine vergleichsweise kleine Einsetzöffnung gepresst wird, ist erfindungsgemäß vorgesehen, dass die Flügelquerschnitte der Halteflügel in dieselbe Umfangsrichtung gebogen sind.

Um bereits beim Einsetzen des Einsetzzapfens die aus elastischem Material bestehenden Halteflügel ausreichend ablenken und umbiegen zu können, ist des weiteren erfindungsgemäß vorgesehen, dass der in Einsetzrichtung des Einsetzzapfens vordere Stirnrandbereich der Halteflügel sich in Einsetzrichtung zunehmend erweitert.

Eine bevorzugte Ausführungsform gemäß der Erfindung sieht vor, dass zumindest an einem Stirnendbereich der Aussteifungshülse und vorzugsweise zumindest an deren zuströmseitigen Stirnendbereich eine den Durchfluss reduzierende Durchflussdrossel oder ein das pro Zeiteinheit durchströmende Durchflussvolumen auf einen druckunabhängigen festgelegten Durchflusswert einregelnder Durchflussmengenregler vorgesehen ist.

Dabei sieht eine bevorzugte Ausführungsform gemäß der Erfindung vor, dass die Aussteifungshülse zumindest an ihrem zu-strömseitigen Stirnendbereich eine Durchflussdrossel- oder Durchflussmengenregler-Aufnahme hat, in die eine Durchflussdrossel oder ein Durchflussmengenregler einsetzbar ist.

Um den Einsetzweg des Einsetzzapfens beim Einsetzen in eine stirnseitige Einsetzöffnung eines Leitungsabschnitts auf ein ausreichendes Maß zu begrenzen, ist es vorteilhaft, wenn die Aussteifungshülse an ihrem einen Stirnende einen als außenumfangsseitiger Ringflansch ausgebildeten Einsetzanschlag hat.

Möglich ist es, dass die Mantellage und die Aussteifungshülse als Zwei- oder Mehrkomponenten-Spritzgussteil hergestellt sind.

Eine bevorzugte Ausführungsform gemäß der Erfindung sieht vor, dass die Mantellage auf die davon separat hergestellte Aussteifungshülse aufgeschoben ist.

Bei bestimmten Anwendungen kann es ausreichend sein, wenn die Mantellage die Aussteifungshülse bis zu ihrem Einsetzanschlag umgreift. Eine andere Ausführungsform gemäß der Erfindung sieht vor, dass die Mantellage die Aussteifungshülse bis über ihren Einsetzanschlag umgreift und dass der von der Mantellage umgriffene Einsetzanschlag als Dichtring ausgebildet ist, der beispielsweise zwischen benachbarten Stirnenden zweier miteinander verbundenen Leitungsabschnitte eingespannt werden kann.

Dabei ist es vorteilhaft, wenn ein Stirnendbereich der Mantellage als ein aus zwei randseitig miteinander verbundenen Ringzonen der Materiallager gebildeter Ringflansch ausgebildet ist und wenn die an ihrem Außenumfangsrand verbundenen Ringzonen den Einsetzanschlag der Aussteifungshülse zwischen sich aufnehmen.

Um das erfindungsgemäße Einsetzelement mit einem Durchflussmengenregler ausstatten zu können und um diesen Durchflussmengenregler möglichst einfach herstellen zu können, ist es vorteilhaft, wenn der Durchflussmengenregler ein Reglergehäuse mit wenigstens einem Ringkanal hat, in dem ein ringförmiger Drosselkörper aus elastischem Material vorgesehen ist, der zwischen sich und einer, an der innenliegenden und/oder außenliegenden Kanalwand vorgesehenen Regelprofilierung einen durch den unter den Druck des durchströmenden Fluids verformenden Drosselkörper veränderbaren Steuerspalt umgrenzt.

Weitere Merkmale der Erfindung ergeben sich aus den Ansprüchen in Verbindung mit der Zeichnung sowie der Beschreibung. Nachstehend wird die Erfindung anhand besonders vorteilhafter Ausführungsbeispiele noch näher beschrieben.

Es zeigt:
- Figur 1: ein in einer perspektivischen Draufsicht auf die Zuströmseite gezeigtes sanitäres Einsetzelement, das mit einem hülsenförmigen Einsetzzapfen in eine stirnseitige Einsetzöffnung eines sanitären Leitungsabschnitts einsetzbar ist, wobei am Außenumfang des Einsetzelements mehrere Halteflügel vorstehen, die hier einen gebogenen Flügelquerschnitt haben,
- Figur 2: das Einsetzelement aus Figur 1 in einer Seitenansicht,
- Figur 3: das Einsetzelement aus Figur' 1 und 2 in einer Draufsicht auf seine Abströmseite,
- Figur 4: das Einsetzelement aus den Figuren 1 bis 3 in einer Draufsicht auf seine Zuströmseite,
- Figur 5: das Einsetzelement aus den Figuren 1 bis 4 in einer auseinandergezogenen perspektivischen Einzelteildarstellung,
- Figur 6: das in einer Einsetzöffnung eingesetzte Einsetzelement aus den Figuren 1 bis 5 in einer Seitenansicht,
- Figur 7: das Einsetzelement aus den Figuren 1 bis 6 in einer typischen Einbausituation,
- Figur 8: ein ebenfalls in einer perspektivischen Draufsicht auf die Zuströmseite gezeigtes weiteres sanitäres Einsetzelement,
- Figur 9: das Einsetzelement aus Figur 8 in einer Seitenansicht,
- Figur 10: das Einsetzelement aus den Figuren 8 und 9 in einer Draufsicht auf seine Abströmseite,
- Figur 11: das Einsetzelement aus den Figuren 8 bis 10 in einer Draufsicht auf seine Zuströmseite,
- Figur 12: das Einsetzelement aus den Figuren 8 bis 11 in einer auseinandergezogenen perspektivischen Einzelteildarstellung, und
- Figur 13: das in einer Einsetzöffnung eingesetzte Einsetzelement aus den Figuren 8 bis 12 in einer Seitenansicht.

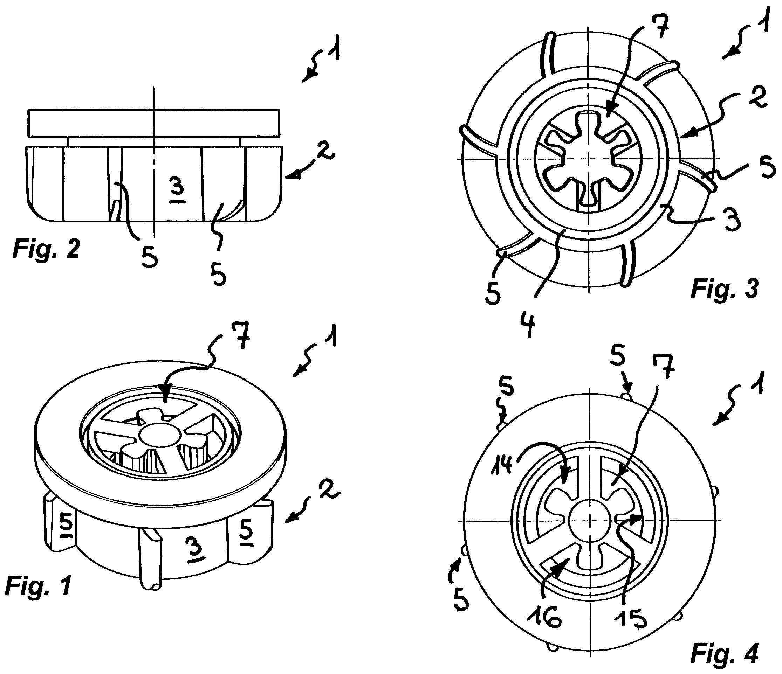

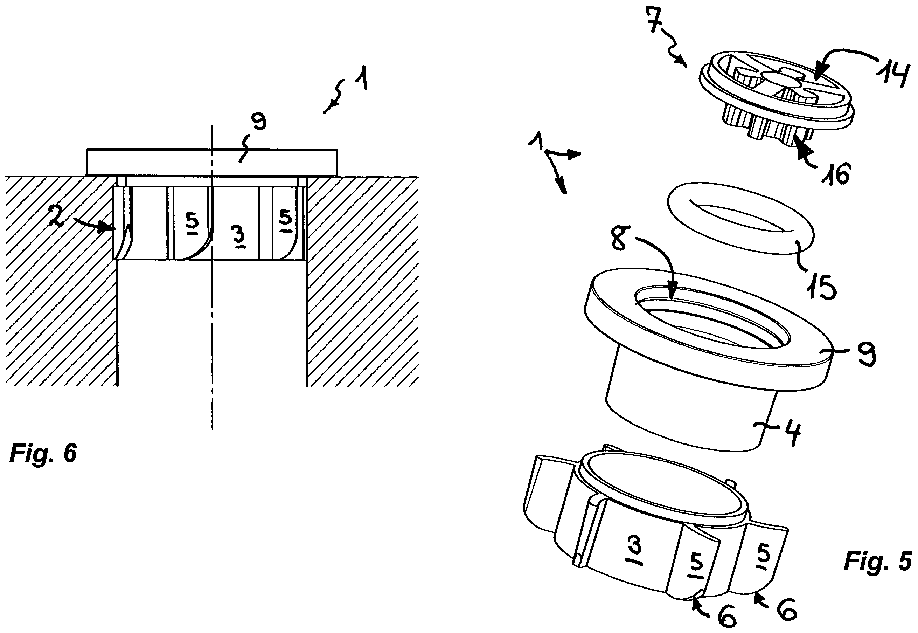

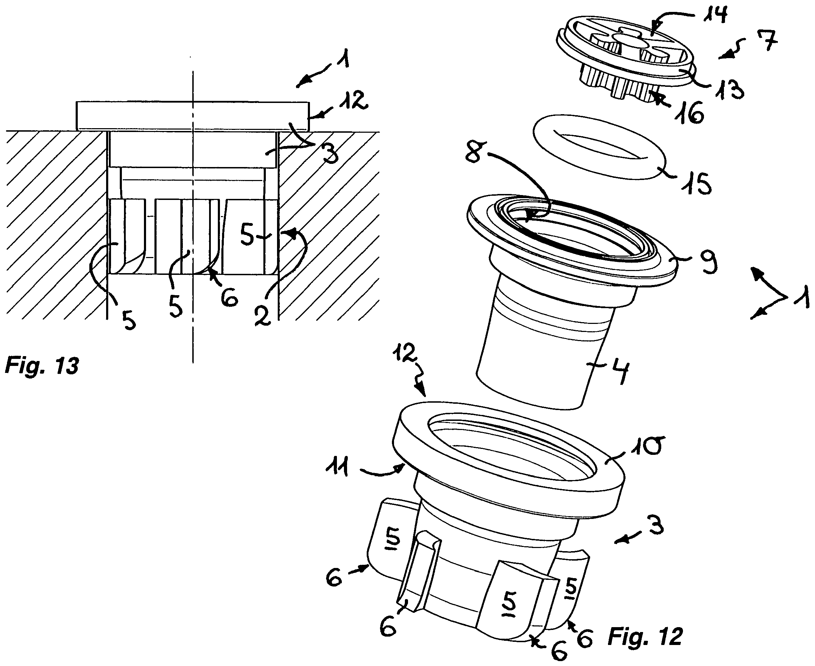

In den Figuren 1 bis 7 und 8 bis 13 sind zwei verschiedene Ausführungen eines sanitären Einsetzelementes 1 dargestellt.

Das Einsetzelement 1 weist einen hülsenförmigen Einsetzzapfen 2 auf, mit dem das Einsetzelement 1 in eine stirnseitige Einsetzöffnung eines sanitären Leitungsabschnitts einsetzbar ist. Dieser Einsetzzapfen 2 hat zur reibschlüssigen Befestigung in der Einsetzöffnung zumindest außenumfangsseitig eine Mantellage 3 aus elastischem Material. Um auch eine vergleichsweise dünne Mantellage 3, die den lichten Durchflussquerschnitt durch den hülsenförmigen Einsetzzapfen 2 insbesondere auch bei niedrigen Drücken nicht wesentlich beeinträchtigt, in einer quer zur Zapfen-Längsachse des Einsetzzapfens 2 orientierten Richtung ausreichend auszusteifen, damit das elastische Material der Mantellage 3 gegen den Leitungsinnenumfang gepresst und der Einsetzzapfen 2 dort sicher und fest gehalten werden kann, ist eine Aussteifungshülse 4 aus einem demgegenüber unnachgiebigen Material vorgesehen, die von der Mantellage 3 umgriffen wird. Zum Erreichen eines größeren Durchflusses im Niederdruckbereich sind nämlich größere Querschnitte erforderlich. Dazu ist es notwendig, die Wandstärke des hülsenförmigen Einsetzzapfens 2 zu reduzieren. Um beim Einpressen des Einsetzzapfens 2 ein Kollabieren seiner aus elastischem Material bestehenden Mantellage 3 zu verhindern, und um den gewünschten Anpressdruck der Mantellage auf die Innenumfangsseite des Leitungsabschnitts im Bereich der stirnseitigen Einsetzöffnung sicherzustellen, ist im Einsetzzapfen 2 eine Aussteifungshülse 4 vorgesehen, die von der Mantellage 3 umgriffen wird. Aufgrund der Aussteifungshülse 4 wird stets eine ausreichende Verpressung des Einsetzzapfens 2 am Innenumfang des die stirnseitige Einsetzöffnung aufweisenden Leitungsabschnitts gewährleistet.

Wie in den Figuren 1 bis 13 erkennbar ist, ist an der Mantellage 3 wenigstens ein Halteflügel 5 aus elastischem Material vorgesehen. Der zumindest eine Halteflügel 5 steht quer zur Zapfen-Längsachse des Einsetzzapfens 2 über diesen vor. Um beim Einsetzen oder Einpressen des Einsetzzapfens 2 in die Einsetzöffnung eine Zentrierung des Einsetzzapfens 2 sicherzustellen, sind an dem Einsetzelement 1 mindestens zwei und vorzugsweise mehr als zwei Halteflügel 5 vorgesehen, die in Umfangsrichtung des Einsetzzapfens 2 in gleichmäßigen Abständen voneinander verteilt angeordnet sind. Jeder dieser Halteflügel 5 weist einen gebogenen Flügelquerschnitt auf, wobei die Flügelquerschnitte der Halteflügel 5 in dieselbe Umfangsrichtung gebogen sind.

Damit beim Einpressen des Einsetzzapfens 2 und seiner Halteflügel 5 in die Einsetzöffnung eine eventuell notwendige Verformung der Halteflügel 5 in dieselbe Umfangsrichtung ohne weiteres sichergestellt werden kann, ist es vorteilhaft, wenn der in Einsetzrichtung des Einsetzzapfens 2 vordere Stirnrandbereich 6 des wenigstens einen Halteflügels 5 sich in Einsetzrichtung zunehmend erweitert. Durch den sich in Einsetzrichtung zunehmend erweiterten Stirnrandbereich 6 der Halteflügel 5 lässt sich der Einsetzzapfen 2 ohne weiteres in eine entsprechende Einsetzöffnung eindrücken, ohne dass dabei die Halteflügel 5 noch umständlich von Hand verformt und angefügt werden müssten.

Bevorzugte Ausführungsformen des hier dargestellten Einsetzelementes 1 sehen vor, dass zumindest an einem Stirnendbereich der Aussteifungshülse 4 und vorzugsweise an deren zuströmseitigen Stirnendbereich eine den Durchfluss reduzierende Durchflussdrossel oder - wie hier - ein Durchflussmengenregler 7 vorgesehen ist, der das pro Zeiteinheit durchströmende Durchflussvolumen auf einen druckunabhängigen festgelegten Durchflusswert einzuregeln hat.

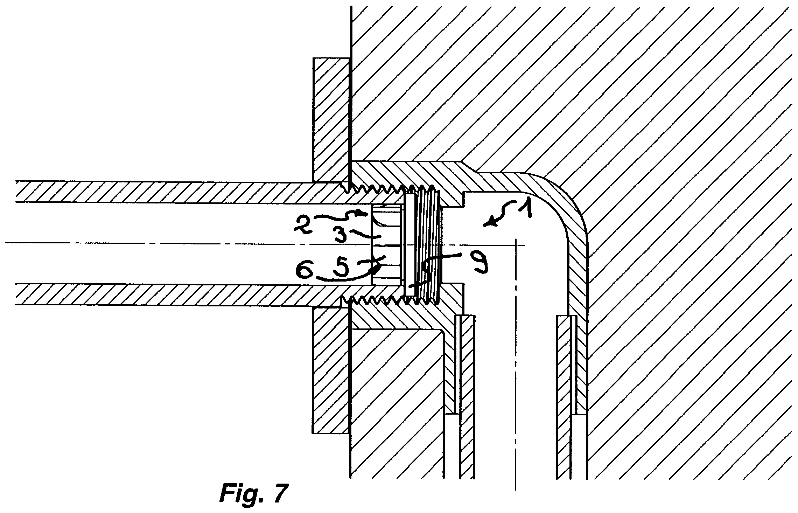

Die Aussteifungshülse 4 der hier in den Figuren 1 bis 7 einerseits und den Figuren 7 bis 13 andererseits dargestellten Einbauelemente 1 weisen zumindest an ihrem zuströmseitigen Stirnendbereich eine Durchflussdrossel- oder Durchflussmengenregler-Aufnahme 8 auf, in die eine Durchflussdrossel oder hier der Durchflussmengenregler 7 einsetzbar ist. Wie aus einem Vergleich der Figuren 1 bis 13 deutlich wird, weist die Aussteifungshülse 4 der hier dargestellten Einsetzelemente 1 an ihrem zuströmseitigen Stirnende einen als außenumfangsseitiger Ringflansch ausgebildeten Einsetzanschlag 9 auf.

Die Mantellage 3 und die Aussteifungshülse 4 können als Mehrkomponenten-Spritzgussteil hergestellt werden. Eine einfache Herstellung des erfindungsgemäßen Einsetzelementes 1 besteht jedoch auch darin, die Mantellage 3 auf die davon separat hergestellte Aussteifungshülse 4 aufzuschieben.

Bei dem in den Figuren 1 bis 7 gezeigten Ausführungsbeispiel des Einsetzelementes 1 umgreift die Mantellage 3 die Aussteifungshülse 4 bis zu ihrem als Ringflansch dienenden Einsetzanschlag 9. Die Mantellage 3 dient bei dieser Ausführungsform dazu, das Einsetzelement 1 gemäß den Figuren 1 bis 7 in der stirnseitigen Einsetzöffnung eines Leitungsabschnitts zu verpressen und fest zu halten. In Figur 7 ist eine typische Einbausituation für ein solches Einsetzelement gemäß den Figuren 1 bis 7 in einem wandmontierten Duscharm gezeigt, der üblicherweise im Anschlussgewinde gedichtet wird, so dass dort der als Ringflansch dienende Einsetzanschlag 9 nicht zwischen zwei benachbarten Stirnrändern gegenüberliegender Leitungsabschnitte eingespannt werden kann.

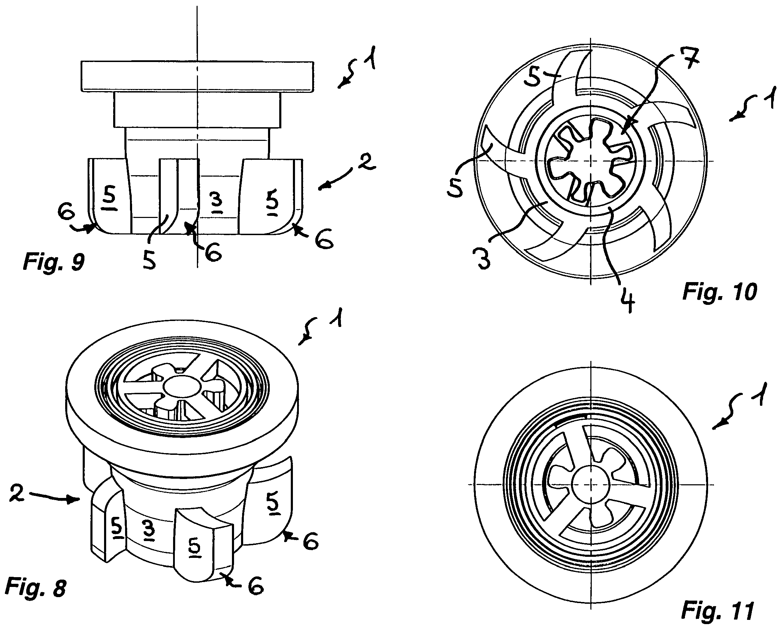

Bei dem in den Figuren 8 bis 13 gezeigten Ausführungsbeispiel des Einsetzelementes 1 umgreift die Mantellage 3 die Aussteifungshülse 4 bis über ihren Einsetzanschlag 9. Dabei ist der von der Mantellage 3 umgriffene Einsetzanschlag 9 als Dichtring ausgebildet, der zwischen benachbarten Stirnenden zweier miteinander verbundener Leitungsabschnitte eingespannt werden kann. Dazu ist ein Stirnendbereich der Mantellage 3 als ein aus zwei randseitig miteinander verbundenen Ringzonen 10, 11 der Mantellage 3 gebildeter Ringflansch 12 ausgebildet. Die Ringzonen 10, 11 dieses Ringflansches 12 sind an ihrem Außenumfangsrand verbunden und nehmen zwischen sich den Einsetzanschlag 9 der Aussteifungshülse 4 auf. Das in den Figuren 8 bis 13 gezeigte Ausführungsbeispiel des Einsetzelementes 1 kann dabei zusätzlich auch eine elastomere Abdichtung in axialer Richtung gewährleisten. Das in den Figuren 8 bis 13 gezeigte Ausführungsbeispiel wird daher bevorzugt in Handbrausen beziehungsweise in Überwurfmutter-Verbindungen eingesetzt, weil es die notwendige axiale Abdichtung bereits integral enthält.

Die in den Einsetzelementen 1 gemäß den Figuren 1 bis 13 verwendeten Durchflussmengenregler weisen hier ein Reglergehäuse 13 auf, in dem wenigstens ein Ringkanal 14 vorgesehen ist. In diesen Ringkanal 14 der Durchflussmengenregler 7 ist ein ringförmiger Drosselkörper 15 aus elastischem Material eingelegt, der zwischen sich und einer an der innenliegenden und/oder außenliegenden Kanalwand vorgesehenen Regelprofilierung 16 einen durch den unter dem Druck des durchströmenden Fluids verformenden Drosselkörper 15 veränderbaren Steuerspalt umgrenzt.

### Bezugszeichenliste

- 1: Sanitäres Einsetzelement
- 2: Einsetzzapfen
- 3: Mantellage
- 4: Aussteifungshülse
- 5: Halteflügel
- 6: Stirnrandbereich
- 7: Durchflussmengenregler
- 8: Durchflussmengenregler-Aufnahme
- 9: Einsetzanschlag
- 10: Ringzone
- 11: Ringzone
- 12: Ringflansch
- 13: Reglergehäuse
- 14: Ringkanal
- 15: Drosselkörper
- 16: Regelprofilierung

## Patentansprüche

1. Sanitäres Einsetzelement (1) mit einem hülsenförmigen Einsetzzapfen (2), mit dem das Einsetzelement in eine stirnseitige Einsetzöffnung eines sanitären Leitungsabschnitts einsetzbar ist, welcher Einsetzzapfen (2) zur reibschlüssigen Befestigung in der Einsetzöffnung zumindest außenumfangsseitig eine Mantellage (3) aus elastischem Material aufweist, und mit einer Aussteifungshülse (4), die zur quer zur Zapfen-Längsachse orientierten Aussteifung der Mantellage (3) vorgesehen, aus einem demgegenüber unnachgiebigen Material hergestellt und von der Mantellage (3) umgriffen ist, wobei an der Mantellage (3) mindestens zwei Halteflügel (5) aus elastischem Material einstückig angeformt sind, die in Umfangsrichtung des Einsetzzapfens (2) verteilt angeordnet sind und quer zur Zapfen-Längsachse des Einsetzzapfens (2) über diesen vorstehen, und wobei die Halteflügel (5) einen gebogenen Flügelquerschnitt haben, **dadurch gekennzeichnet, dass** die Flügelquerschnitte der Halteflügel (5) in dieselbe Umfangsrichtung gebogen sind, und dass die Halteflügel (5) zur Verformung der Halteflügel (5) in dieselbe Umfangsrichtung jeweils einen, in Einsetzrichtung des Einsetzzapfens (2) vorderen Stirnrandbereich aufweisen, der sich in Einsetzrichtung zunehmend erweitert.

2. Sanitäres Einsetzelement nach Anspruch 1, **dadurch gekennzeichnet, dass** zumindest an einem Stirnendbereich der Aussteifungshülse (4) und vorzugs-weise zumindest an deren zuströmseitigen Stirnendbereich eine Durchflussdrossel oder ein Durchflussmengenregler (7) vorgesehen ist.

3. Sanitäres Einsetzelement nach Anspruch 2, **dadurch gekennzeichnet, dass** die Aussteifungshülse (4) zumindest an ihrem zuströmseitigen Stirnendbereich eine Durchflussdrossel- oder Durchflussmengenregler-Aufnahme (8) hat, in die eine Durchflussdrossel oder ein Durchflussmengenregler (7) einsetzbar ist.

4. Sanitäres Einsetzelement nach einem der Ansprüche 1 bis 3, **dadurch gekennzeichnet, dass** die Mantellage (3) die Aussteifungshülse (4) bis zu einem Einsetzanschlag (9) der Aussteifungshülse (4) umgreift.

5. Sanitäres Einsetzelement nach einem der Ansprüche 1 bis 3, **dadurch gekennzeichnet, dass** die Mantellage (3) die Aussteifungshülse (4) bis über einen Einsetzanschlag (9) der Aussteifungshülse (4) umgreift und dass der von der Mantellage (3) umgriffene Einsetzanschlag (9) als Dichtring ausgebildet ist.

6. Sanitäres Einsetzelement nach Anspruch 5, **dadurch gekennzeichnet, dass** ein Stirnendbereich der Mantellage (3) als ein aus zwei randseitig miteinander verbundenen Ringzonen (10, 11) der Mantellage (3) gebildeter Ringflansch (12) ausgebildet ist, und dass die an ihrem Außenumfangsrand verbundenen Ringzonen (10, 11) den Einsetzanschlag (9) der Aussteifungshülse (4) zwischen sich aufnehmen.

7. Sanitäres Einsetzelement nach Anspruch 2 oder einem der Ansprüche 3 - 6 im Rückbezug auf Anspruch 2, **dadurch gekennzeichnet, dass** der Durchflussmengenregler (7) ein Reglergehäuse (13) mit wenigstens einem Ringkanal (14) hat, in dem (14) ein ringförmiger Drosselkörper (15) aus elastischem Material vorgesehen ist, der zwischen sich und einer, an einer innenliegenden und/oder außenliegenden Kanalwand vorgesehenen Regelprofilierung (16) einen durch den unter den Druck des durchströmenden Fluids verformenden Drosselkörper (15) veränderbaren Steuerspalt umgrenzt.

## Claims

1. Insertable plumbing element (1) having a sleeve-shaped insertion plug (2), by means of which the insertable element can be inserted into an end-located insertion opening in a plumbing pipe section, which insertion plug (2) has, at least on the outer circumference, an outer layer (3) of elastic material for securing it by frictional engagement in the insertion opening, and having a reinforcing sleeve (4), which is provided to reinforce the outer layer (3) transversely to the plug longitudinal axis and which is produced from a material that is inflexible in comparison with the outer layer and which is surrounded by the outer layer (3), wherein at least two retaining fins (5) composed of elastic material are formed integrally on the outer layer (3), said fins being arranged in a manner distributed in a circumferential direction of the insertion plug (2) and projecting beyond the insertion plug (2) transversely to the plug longitudinal axis, and wherein the retaining fins (5) have a bent fin cross section, **characterized in that** the fin cross sections of the retaining fins (5) are bent in the same circumferential direction, and **in that** the retaining fins (5) each have, for deformation of the retaining fins (5) in the same circumferential direction, an end edge region which is at the front in the insertion direction of the insertion plug (2) and which widens to an increasing extent in the insertion direction.

2. Insertable plumbing element according to Claim 1, **characterized in that** a flow restrictor or a flow rate regulator (7) is provided at least on one end region of the reinforcing sleeve (4) and preferably at least on the inflow-side end region thereof.

3. Insertable plumbing element according to Claim 2, **characterized in that** the reinforcing sleeve (4) has a flow-restrictor or flow-rate-regulator receptacle (8), at least at its inflow-side end region, into which receptacle a flow restrictor or a flow rate regulator (7) can be inserted.

4. Insertable plumbing element according to one of Claims 1 to 3, **characterized in that** the outer layer (3) surrounds the reinforcing sleeve (4) up to an insertion stop (9) of the reinforcing sleeve (4) .

5. Insertable plumbing element according to one of Claims 1 to 3, **characterized in that** the outer layer (3) surrounds the reinforcing sleeve (4) beyond an insertion stop (9) of the reinforcing sleeve (4) and **in that** the insertion stop (9) surrounded by the outer layer (3) is designed as a sealing ring.

6. Insertable plumbing element according to Claim 5, **characterized in that** an end region of the outer layer (3) is designed as a ring-shaped flange (12) formed by two ring-shaped zones connected to one another at the edges, and **in that** the ring-shaped zones (10, 11), which are connected at the outer circumferential edge thereof, enclose the insertion stop (9) of the reinforcing sleeve (4) between them.

7. Insertable plumbing element according to Claim 2 or one of Claims 3-6 with reference back to Claim 2, **characterized in that** the flow rate regulator (7) has a regulator housing (13) having at least one ring-shaped channel (14), in which channel (14) a ring-shaped restrictor element (15) composed of elastic material is provided, which bounds a control gap between itself and a regulating profile (16) provided on an inner and/or an outer channel wall, said gap being variable by means of the restrictor element (15), which is deformed under the pressure of the fluid flowing through.

## Revendications

1. Élément d'insertion sanitaire (1) avec un mamelon insérable en forme de douille (2), avec lequel l'élément d'insertion peut être inséré dans une ouverture d'insertion frontale d'une section de conduit sanitaire, ledit mamelon insérable (2) présentant au moins en périphérie extérieure une couche d'enveloppe (3) en matériau élastique pour la fixation par frottement dans l'ouverture d'insertion, et avec une douille de renforcement (4), qui est prévue pour le renforcement de la couche d'enveloppe (3) orienté transversalement à l'axe longitudinal du mamelon, qui est au contraire fabriquée en un matériau non souple et qui est entourée par la couche d'enveloppe (3), dans lequel au moins deux ailes de maintien (5) en matériau élastique sont formées d'une seule pièce sur la couche d'enveloppe (3), qui sont disposées de façon répartie dans la direction périphérique du mamelon insérable (2) et qui sont saillantes sur ledit mamelon insérable (2) transversalement à l'axe longitudinal de mamelon du mamelon insérable (2) et dans lequel les ailes de maintien (5) ont une section transversale d'aile incurvée, **caractérisé en ce que** les sections transversales d'aile des ailes de maintien (5) sont incurvées dans la même direction périphérique et **en ce que** les ailes de maintien (5) présentent pour la déformation des ailes de maintien (5) dans la même direction périphérique respectivement une région de bord frontal avant dans la direction d'insertion du mamelon insérable (2), qui s'élargit de plus en plus dans la direction d'insertion.

2. Élément d'insertion sanitaire selon la revendication 1, **caractérisé en ce qu'**il est prévu au moins sur une région d'extrémité frontale de la douille de renforcement (4) et de préférence au moins sur sa région d'extrémité frontale amont un étranglement d'écoulement ou un régulateur de débit (7).

3. Élément d'insertion sanitaire selon la revendication 2, **caractérisé en ce que** la douille de renforcement (4) présente au moins à sa région d'extrémité frontale amont un logement d'étranglement d'écoulement ou de régulateur de débit (8), dans lequel un étranglement d'écoulement ou un régulateur de débit (7) peut être inséré.

4. Élément d'insertion sanitaire selon l'une quelconque des revendications 1 à 3, **caractérisé en ce que** la couche d'enveloppe (3) entoure la douille de renforcement (4) jusqu'à une butée d'insertion (9) de la douille de renforcement (4).

5. Élément d'insertion sanitaire selon l'une quelconque des revendications 1 à 3, **caractérisé en ce que** la couche d'enveloppe (3) entoure la douille de renforcement (4) jusqu'au-delà d'une butée d'insertion (9) de la douille de renforcement (4) et **en ce que** la butée d'insertion (9) entourée par la couche d'enveloppe (3) est réalisée sous forme d'anneau d'étanchéité.

6. Élément d'insertion sanitaire selon la revendication 5, **caractérisé en ce qu'**une région d'extrémité frontale de la couche d'enveloppe (3) est réalisée sous la forme d'une bride annulaire (12) formée de deux zones annulaires (11, 12) assemblées l'une à l'autre par les bords, et **en ce que** les zones annulaires (10, 11) assemblées à leur bord périphérique extérieur comprennent entre elles la butée d'insertion (9) de la douille de renforcement (4).

7. Élément d'insertion sanitaire selon la revendication 2 ou l'une quelconque des revendications 3 à 6 dans la mesure de leur relation à la revendication 2, **caractérisé en ce que** le régulateur de débit (7) comporte un boîtier de régulateur (13) avec au moins un canal annulaire (14), dans lequel (14) il est prévu un corps d'étranglement annulaire (15) en matériau élastique, qui délimite entre lui-même et un profilage de réglage (16) prévu sur une paroi de canal intérieure et/ou extérieure une fente de commande pouvant varier au moyen du corps d'étranglement (15) qui se déforme sous la pression du fluide en écoulement.
